# EUROPEAN PATENT SPECIFICATION

(11) **EP 2 029 421 B1**
(45) Date of publication and mention of the grant of the patent: **27.10.2010**
(21) Application number: 07730766.8
(22) Date of filing: 16.05.2007
(51) Int. Cl.: B63B 25/16, B63H 21/14, F17C 13/08

(54) **A MARINE VESSEL**
SCHIFF
NAVIRE

(30) Priority: 19.06.2006 FI 20065419
(43) Date of publication of application: 04.03.2009
(73) Proprietor: Wärtsilä Finland Oy, 65380 Vaasa (FI)
(72) Inventor: HANNULA, Susanna, 20900 Turku (FI); LEVANDER, Oskar, 20900 Turku (FI); SIPILÄ, Tuomas, 20880 Turku (FI); JANSSON, Krister, 21260 Raisio (FI); MARTIKAINEN, Pasi, 20320 Turku (FI)
(74) Representative: Finnilä, Kim Larseman
(86) International application number: PCT/FI2007/050279
(87) International publication number: WO 2007/147931

(56) References cited:
- WO-A-2005/113328
- US-A- 3 830 180
- US-A1- 2006 053 806
- US-B1- 6 237 347
- BALTHASAR H: "Ein neues Fuessiggas-Transportsystem" JAHRBUCH DER SCHIFFBAUTECHNISCHEN GESELLSCHAFT, BERLIN, DE, vol. 68, 1974, pages 121-133, XP002302219 ISSN: 0374-1222

## Description

The invention relates to a marine vessel operated with gaseous fuel having at least one gas powered engine, which vessel is provided with a fuel tank in which the fuel is stored at liquid phase, and in which vessel the engine is positioned in an engine room which is provided with an engine room casing extending from the engine room to exterior of the vessel according to preamble of claim 1.

Usage of gaseous fuel in various types of marine vessel is increasing due to its clean combustion and availability compared to e.g. heavy fuel oil or marine diesel oil.

Gas is typically stored in liquefied phase at low temperature tank, which is also a pressure vessel. Positioning of such a tank (or tanks) is problematic since conventional gas tanks are large pressure vessels and space utilization in a vessel is critical when considering economy and convenience of e.g. using the vessel. Liquefied gas tanks are larger in size and heavier than diesel oil tanks. And for example width of lanes in car decks is an important factor for e.g. roro-vessels, in which trucks are run in the ship along a ramp. Insulation of the gas tanks is also a feature which reserves room in the vessel, gas is typically stored at a temperature of about minus 162°C (Natural Gas). One such example is known from US-B1-6 237 347.

An object of the invention is to provide a marine vessel having an engine operated with gaseous fuel, which solves the above mentioned and other problems of prior art.

Object of the invention are met substantially as is disclosed in claim 1. The other claims present more details of different embodiments of the invention.

The basic idea of the invention is to integrate the fuel tank(s) in vicinity of the engine room casing and arranging the tank arrangement to have elongated shape.

According to a preferred embodiment of the invention a marine vessel operated with gaseous fuel having at least one gas powered engine is provided with a fuel tank arrangement in which the fuel is stored in liquid phase. In the vessel the engine is positioned in an engine room which is provided with an engine room casing extending from the engine room to exterior of the vessel. It is characteristic to the invention that the fuel tank arrangement is arranged in vicinity of the engine room casing. This way the tank arrangement may be located in a space which is easily ventilated upwards in the vessel.

The fuel tank arrangement is preferably of elongated shape in a direction substantially deviating from longitudinal axis of the vessel so that it has a vertical dimension and a horizontal dimension and that the vertical dimension is greater than the horizontal dimension. This way the usage of space in a vessel is advantageous.

The fuel tank arrangement preferably comprises a number of interconnected separate tanks. A separate tank is substantially easier to lift out of the vessel than a single large tank in case e.g. reparation is needed. Circular cross section of the tank is particularly beneficial due to tubes are commercially available and their pressure resistance is good.

According to another embodiment of the invention the fuel tank arrangement is positioned in front or aft from an engine room casing in relation to longitudinal axis of the vessel. This provides the maximum usage of space in the vessel.

Hence, the invention provides several benefits:
- Space in which the tank is positioned may be easily ventilated upwards
- Meets the rules for gas tank location of Classification Society
- Located close to midship, which causes only small effect on trim of the vessel
- Long height gives small diameter for tank which results in small reserved area of decks and enables the use of standard pipes for building material
- The number of free lanes on car deck can remain unchanged, since the tanks are aligned with casing
- Small free surface area in tank minimises the formation of boil-off gas
- Tank can be lifted upwards out of the ship for replacement

In the following the invention will be described with the reference to the accompanying schematic drawing, in which
figure 1 illustrates an embodiment of the invention,
figure 2 illustrates another embodiment of the invention, and
figure 3 illustrates cross sectional upper view of figure 1.

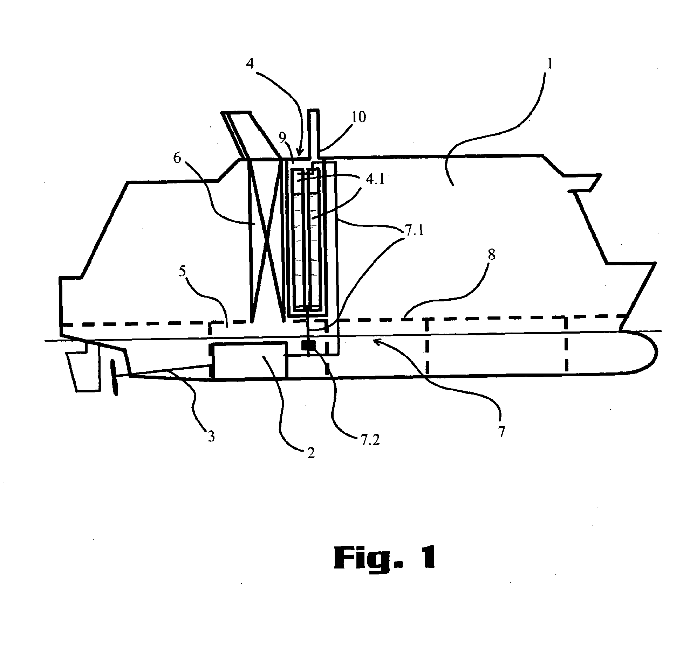

A marine vessel 1 as is shown in the figure 1 is provided with a main engine 2 providing power to the propulsion system 3 of the vessel. It is evident that depending on the type and size of the vessel the number and layout of installed engines may vary. The engine 2 is operated with gaseous fuel which is stored in a fuel tank arrangement 4 in liquid phase which in practise means that the temperature of the gas is typically at about minus 162°C. The engine 2 is installed in an engine room 5. The engine room is provided with engine room casing 6 extending from the engine room to exterior of the vessel 1 through which e.g. the exhaust pipe of the engine may be led. The fuel tank arrangement 4 is arranged in vicinity of the engine room casing longitudinally aligned, in the embodiment of figure 1 above the bulkhead deck 8. Fuel tank arrangement 4 is connected with the engine 2 by mean of a gas supply system 7, which comprises the required piping 7.1 and evaporator device 7.2 for evaporating the liquid to gas and warming it up. The evaporator device is positioned at location separate to the tank arrangement below the bulkhead deck 8 and thus the gravity may be used in fuel conveying.

The fuel tank arrangement is of substantially vertically elongated shape in a direction substantially deviating from longitudinal axis of the vessel. In other words the fuel tank arrangement has a vertical dimension and a horizontal dimension and the vertical dimension is greater than the horizontal dimension. This way cross sectional area required by the tank arrangement is minimized, and deck space is saved. Also the free surface area of the liquid gas is small which minimizes the formation of boil-off gas. Preferably the tank arrangement comprises a tubular tank or, as can be seen from the figures, the fuel tank arrangement 4 comprises a number of tubular tanks 4.1, which are interconnected with each other. This makes it possible to replace smaller individual tank rather than a large single tank. The vessel is preferably provided with a structure being openable at its top deck for hauling the fuel tank out of the vessel (not shown in the figures).

The space 9 for the tanks 4.1 has a vent 10 which connects the space to the atmosphere for keeping the space ventilated.

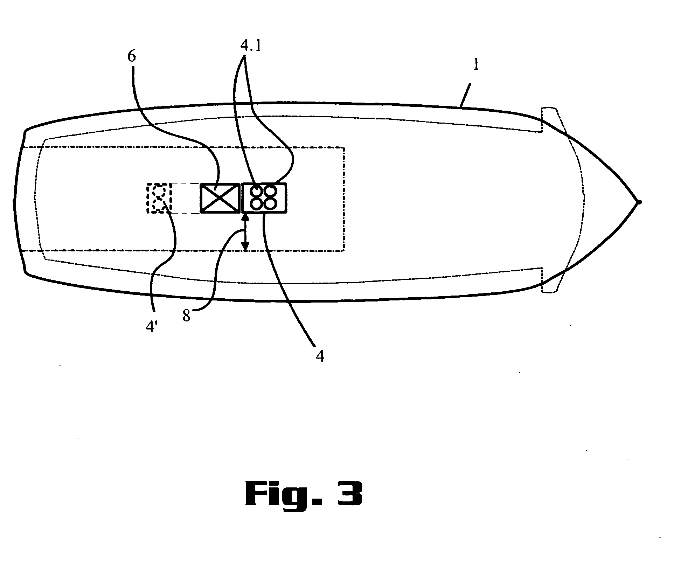

In figure 3 one can see an upper cross sectional view of figure 1. As can be seen the tank arrangement of the present invention makes it possible maximise the usable deck area in the vessel, As an example in figure 3 the lanes 8 on car deck have the maximised number and width since the tank arrangement 4 is positioned in front of the engine room casing in relation to longitudinal axis of the vessel. As depicted with dotted lines the tank arrangement 4' may be arranged also aft from the engine room casing and still providing the same benefits. It can also be seen from figure 3 that the tubular tanks 4.1 have circular cross section.

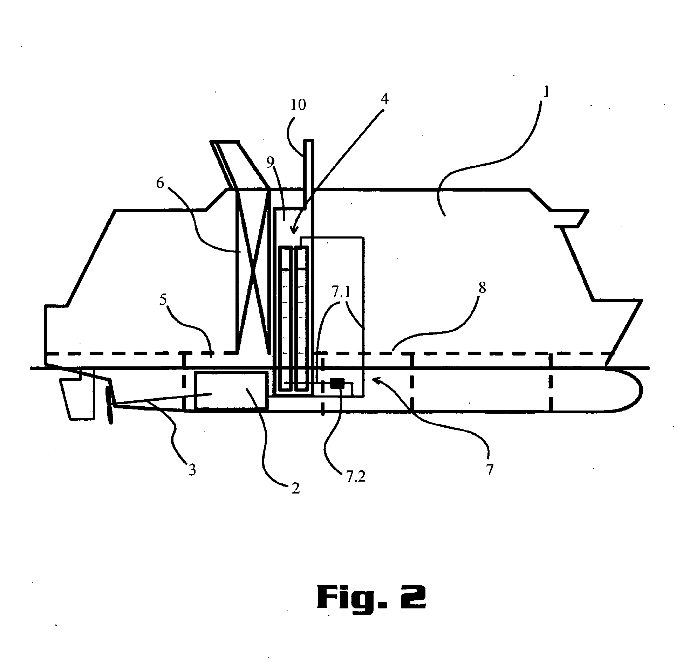

In figure 2 there is shown a vessel and arrangement corresponding to that of figure 1 and thus also corresponding reference numbering is used. Basically only difference is that the fuel tank arrangement is provided to extend below the bulkhead deck 8. This lowers the centre of gravity and makes the vessel to be more stable.

## Claims

1. A marine vessel operated with gaseous fuel having at least one gas powered engine (2), which marine vessel (1) is provided with a fuel tank arrangement (4) in which fuel is stored in liquid phase and which is connected to the engine (2) by means of a gas supply system (7), in which marine vessel (1) the engine (2) is positioned in an engine room provided with an engine room casing (6) extending from the engine room to the exterior of the marine vessel, **characterised in that** the fuel tank arrangement (4) is arranged in vicinity of the engine room casing (6) and longitudinally aligned with the engine room casing (6), and **in that** the fuel tank arrangement (4) is of vertically elongated shape in a direction deviating from longitudinal axis of the marine vessel (1).

2. A marine vessel according to claim 1, **characterised in that** the fuel tank arrangement (4) has a vertical dimension and a horizontal dimension and that the vertical dimension is greater than the horizontal dimension.

3. A marine vessel according to claim 1, **characterised in that** the fuel tank arrangement (4) comprises a number of interconnected separate tanks (4.1).

4. A marine vessel according to claim 3, **characterised in that** the separate tanks (4.1) are formed as vertically extending tubular tanks.

5. A marine vessel according to claim 1, **characterised in that** the fuel tank arrangement (4) is positioned in a space (9) having a vent (10) leading to the exterior of the marine vessel (1).

6. A marine vessel according to claim 1, **characterised in that** the fuel tank arrangement (4) is positioned in front of or aft of the engine room casing (6).

## Patentansprüche

1. Mit gasförmigem Kraftstoff betriebenes Schiff mit mindestens einem gasbetriebenen Motor (2), wobei das Schiff (1) mit einer Kraftstofftankanordnung (4) versehen ist, in der Kraftstoff in flüssiger Phase aufbewahrt ist und die mit dem Motor (2) über ein Gaszufuhrsystem (7) verbunden ist, wobei bei diesem Schiff (1) der Motor (2) in einem Maschinenraum angeordnet ist, der mit einer Maschinenraumeinhausung (6) versehen ist, die sich von dem Maschinenraum bis zum Äußeren des Schiffes erstreckt, **dadurch gekennzeichnet, dass** die Kraftstofftankanordnung (4) in der Nähe der Maschinenraumeinhausung (6) angeordnet und in Längsrichtung mit der Maschinenraumeinhausung (6) ausgerichtet ist und dass die Kraftstofftankanordnung (4) eine vertikal langgestreckte Gestalt in einer Richtung, die von der Längsachse des Schiffs (1) abweicht, aufweist.

2. Schiff nach Anspruch 1, **dadurch gekennzeichnet, dass** die Kraftstofftankanordnung (4) eine vertikale Abmessung und eine horizontale Abmessung aufweist und dass die vertikale Abmessung größer als die horizontale Abmessung ist.

3. Schiff nach Anspruch 1, **dadurch gekennzeichnet, dass** die Kraftstofftankanordnung (4) eine Anzahl von miteinander verbundenen separaten Tanks (4.1) umfasst.

4. Schiff nach Anspruch 3, **dadurch gekennzeichnet, dass** die separaten Tanks (4.1) als sich vertikal erstreckende rohrförmige Tanks ausgebildet sind.

5. Schiff nach Anspruch 1, **dadurch gekennzeichnet, dass** die Kraftstofftankanordnung (4) in einem Raum (9) mit einer Entlüftungseinrichtung (10) angeordnet ist, die zum Äußeren des Schiffes (1) führt.

6. Schiff nach Anspruch 1, **dadurch gekennzeichnet, dass** die Kraftstofftankanordnung (4) bugseitig oder achtern der Maschinenraumeinhausung (6) angeordnet ist.

## Revendications

1. Navire fonctionnant avec du carburant gazeux comportant au moins un moteur à gaz (2), lequel navire (1) est pourvu d'un agencement de réservoir de carburant (4), dans lequel du carburant est stocké en phase liquide et qui est raccordé au moteur (2) au moyen d'un système d'alimentation en gaz (7), dans lequel navire (1) le moteur (2) est positionné dans un compartiment de moteur pourvu d'un carter de compartiment de moteur (6) s'étendant depuis le compartiment de moteur vers l'extérieur du navire, **caractérisé en ce que** l'agencement de réservoir de carburant (4) est disposé à proximité du carter de compartiment de moteur (6) et aligné longitudinalement avec le carter de compartiment de moteur (6), et **en ce que** l'agencement de réservoir de carburant (4) est d'une forme allongée verticalement dans une direction s'écartant de l'axe longitudinal du navire (1).

2. Navire selon la revendication 1, **caractérisé en ce que** l'agencement de réservoir de carburant (4) a une dimension verticale et une dimension horizontale et **en ce que** la dimension verticale est supérieure à la dimension horizontale.

3. Navire selon la revendication 1, **caractérisé en ce que** l'agencement de réservoir de carburant (4) comprend un certain nombre de réservoirs séparés (4.1) interconnectés.

4. Navire selon la revendication 3, **caractérisé en ce que** les réservoirs séparés (4.1) sont formés dans des réservoirs tubulaires s'étendant verticalement.

5. Navire selon la revendication 1, **caractérisé en ce que** l'agencement de réservoir de carburant (4) est positionné dans un espace (9) comportant un évent (10) menant à l'intérieur du navire (1).

6. Navire selon la revendication 1, **caractérisé en ce que** l'agencement de réservoir de carburant (4) est positionné à l'avant ou à l'arrière du carter de compartiment de moteur (6).
